# EUROPEAN PATENT APPLICATION

(11) **EP 2 570 833 A1**
(43) Date of publication of application: **20.03.2013**
(21) Application number: 11181069.3
(22) Date of filing: 13.09.2011
(51) Int. Cl.: G02B 6/44, H01R 13/58

(54) **Strain relief device for cables, system comprising a plurality of strain relief devices and fiber optic distribution device**

(71) Applicant: CCS Technology, Inc., Wilmington, DE 19803 (US)
(72) Inventor: Karolak, Przemyslaw, 62-812 Jastrzebniki (PL); Ruda, Michal, 93-430 Lodz (PL)
(74) Representative: Sturm, Christoph

(57) **Abstract**

Strain relief device (10) for cables, comprising a basic body (11), the basic body (11) having a first area (12) with a first opening (13) for receiving and guiding at least one cable to be strain relieved, the basic body (11) further having a second area (14) with a second opening (15) for receiving a screw member (16), the second opening (15) being surrounded by a profiled surface (17), whereby strengthening elements of at least one cable received and guided with the first opening (13) can be clamped between a screw head (19) of the screw member (16) and the profiled surface (17) surrounding the second opening (15).

## Description

The present patent application relates to a strain relief device for cables. Further on, the present patent application relates to a system comprising a plurality of strain relief devices. In addition the present patent application relates to a fiber optic distribution device.

When building data transmission networks from optical cables, it is necessary to interconnect optical fibers of the cables and to store excess lengths of said optical fibers. The connection points and excess lengths must be handled in fiber optic distribution devices outside of buildings and inside of buildings. Outside of buildings for so-called outdoor applications, connection points between optical fibers and excess lengths thereof, are typically accommodated in fiber optic distribution devices designed as cable sleeves or street cabinets. Inside of buildings for so-called indoor applications, connection points between optical fibers and excess lengths thereof, are typically accommodated in fiber optic distribution devices designed as distribution cabinets or distribution frames. Fiber optic distribution devices designed as wall boxes can be used both outside of buildings and inside of buildings. Fiber optic fiber distribution devices designed as wall boxes are known from the product catalogue entitled "Accessories for fiber optic networks, Edition 1, pages 184 to 187, issue 2001, Corning Cable Systems GmbH & Co. KG". The wall boxes disclosed in this product catalogue comprise a housing and optical fiber handling components, specifically splice cassettes and/or patch panels and/or strain relief devices, positioned inside the housing for handling connection points and excess lengths of optical fibers and for providing strain relief for the optical cables.

One of the key issues within fiber optic distribution devices is strain relieving of the optical cables entering the fiber optic distribution device. Known strain relief devices are usually suitable for one cable diameter only.

The present application is based on the problem of providing a novel strain relief device for cables for use in fiber optic distribution devices being suitable for a variety of different cable diameters and reliable at the same time as well as providing a novel system of strain relief devices and a novel fiber optic distribution device.

The strain relief device according to the present patent application comprises a basic body, the basic body having a first area with a first opening for receiving and guiding at least one cable to be strain relieved, the basic body further having a second area with a second opening for receiving a screw member, the second opening being surrounded by a profiled surface, whereby strengthening elements of at least one cable received and guided with the first opening can be clamped between a screw head of the screw member and the profiled surface surrounding the second opening.

The novel strain relief device allows a quick and easy operation. The novel strain relief device allows an installation and handling of cables outside the fiber optic distribution device, hence the size of fiber optic distribution device is in terms of installation and handling not a limitation. The novel strain relief device does in a certain range of cable diameters not depend on the actual cable diameter and can be used for a variety of different cable diameters. No additional tools are needed for installation. The novel strain relief device is a separate component and can therefore be used for different applications.

The system comprising a plurality of strain relief devices is defined in claim 11.

The fiber optic distribution device according to the present patent application comprises a housing and at least one strain relief device according to the present patent application.

Preferred embodiments of the strain relief device are given in the dependent claims and the description below. Exemplary embodiments will be explained in more detail with reference to the drawing, in which:
- figure 1: shows a perspective view of a novel strain relief device for cables;
- figure 2: shows a perspective view of two strain relief devices of figure 1 providing a system of strain relief devices;
- figure 3: shows a perspective view of the system of figure 1 together with one cable to be strain relieved in one of the strain relief devices;
- figure 4: shows the arrangement of figure 3 when installing the cable to be strain relieved;
- figure 5: shows a perspective view of the system of figure 1 together with two cables to be strain relieved; and
- figure 6: shows the arrangement of figure 5 when installing the cables to be strain relieved.

As shown in the Figures, the present application relates to a strain relief device 10 for cables, to a system comprising a plurality of strain relief devices 10 and to a fiber optic distribution device comprising at least one strain relief device 10.

The strain relief device 10 comprises a basic body 11. The basic body 11 has a first area 12 with a first opening 13 for receiving and guiding at least one cable to be strain relieved. Further on, the basic body 11 has a second area 14 with a second opening 15 for receiving a screw member 16, said second opening 15 being surrounded by a profiled surface 17.

Strengthening elements SRE of at least one cable 18 received and guided with the first opening 13 can be clamped between a screw head 19 of the screw member 16 and the profiled surface 17 surrounding the second opening 15. The profiled surface 17 surrounding the second opening 15 comprises protrusions 20. Each protrusion 20 is shaped like a circular arc. The protrusions 20 are concentrically positioned around the second opening 15.

The first opening 13 and the second opening 15 run generally parallel to each other.

The basic body 11 has a cuboid shape, whereby the first area 12 having the first opening 13 is located at a first corner region of the cuboid shaped basic body 11, and whereby the second area 14 having the second opening 15 is located at a second, opposite corner region of the cuboid shaped basic body 11. In the shown embodiment, the first area 12 having the first opening 13 is located at the upper left corner region of the cuboid shaped basic body 11 and the second area 14 having the second opening 15 is located at the lower right corner region of the cuboid shaped basic body 11.

The first opening 13 for receiving and guiding at least one cable to be strain relieved has a conically shaped inner surface having a widened end section 21 and a tapered end section 22. In addition, adjacent to the tapered end section 22 the first opening 13 has a stop element 23.

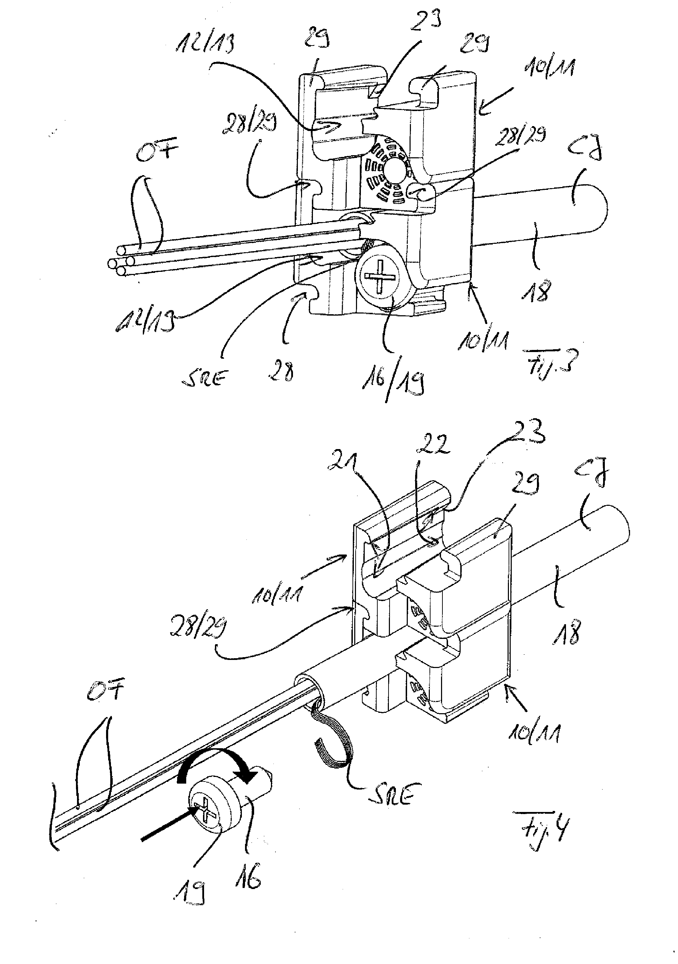

In a first application of the strain relief device 10, the first opening 13 receives directly one cable 18 to be strain relieved (see Figures 3 and 4). This application is used in connection with cables 18 having a relative large cable diameter. The cable 18 shown in figures 3 and 4 comprises an outer cable jacket CJ, strengthening elements SRE and optical fibers OF. The strengthening elements SRE may be from aramid yarn and clamped between the screw head 19 of the screw member 16 and the profiled surface 17.

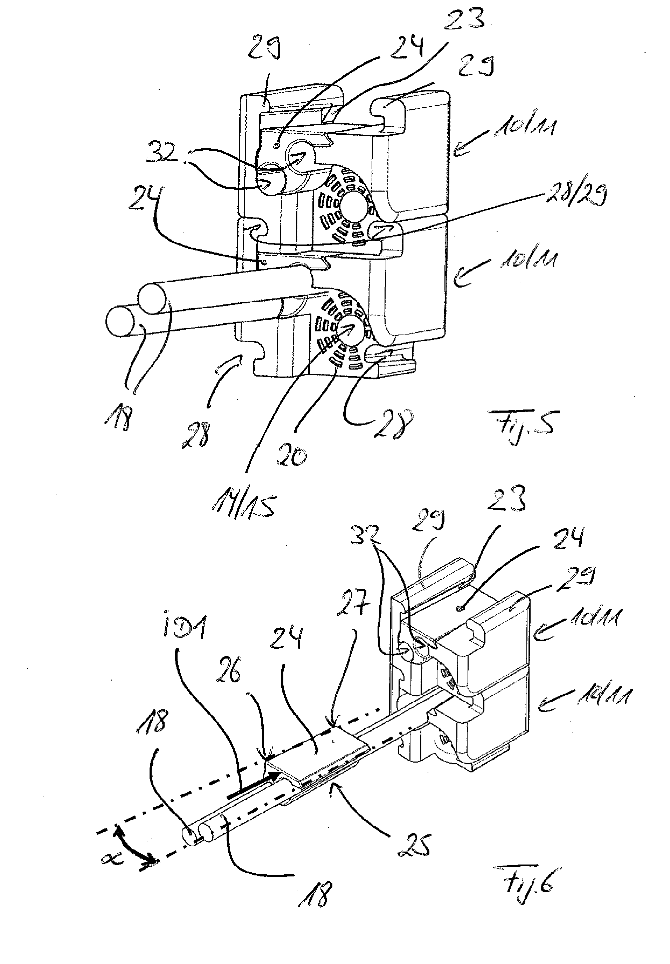

In a second application of the strain relief device 10, the first opening 13 receives indirectly though an insertion adapter 24 a plurality of cables 18 to be strain relieved (see Figures 5 and 6). In the shown embodiment, the insertion adapter 24 receives two cables 18.

The insertion adapter 24 has a conically shaped outer surface 25 having a widened end section 26 and a tapered end section 27 and openings 32 each for receiving one cable 18 to be strain relieved.

The widened end section 26 and the tapered end section 27 of the conically shaped outer surface 25 of the insertion adapter 24 define the cone angle α as shown in figure 6.

When inserting the insertion adapter 24 into the first opening 13 of the basic body 11, the conically shaped outer surface 25 of the insertion adapter 24 acts together with the inner surface of the first opening 13 limiting the insertion movement of the insertion adapter 24 into the first opening 13 along the insertion direction ID1 (see figure 6).

Fastening elements 28, 29 are assigned to opposite side walls 30, 31 of the basic body 11, namely first fastening elements 28 to a first side wall 30 of the basic body 11 and second fastening elements 29 to a second side wall 31 of the basic body 11.

The first fastening elements 28 assigned to a first side wall 30 are in the shown embodiment provided by recesses and the second fastening elements 29 assigned to the opposite, second side wall 31 are provided by protrusions.

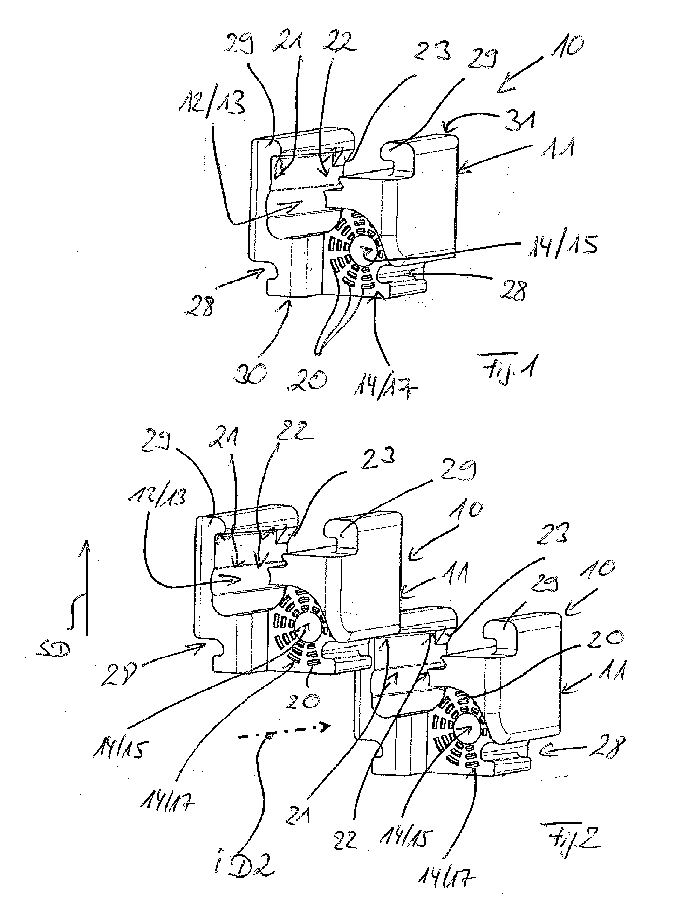

When providing a system of stacked strain relief devices 10 (see figures 2) the second fastening elements 29 of a basic body 11 of a first strain relief device 10 are inserted in the insertion direction ID2 into the first fastening elements 28 of a basic body 11 of a second strain relief device 10 so that the fastening elements 28 and 29 are engaging with each other, whereby the stop element 23 provided adjacent to the tapered end section 22 of the first opening 13 limits this insertion when stacking strain relief devices 10 above each other.

The insertion direction ID2 which is effective when stacking strain relief devices 10 above each other runs in general parallel to the insertion direction ID1 which is effective when inserting an insertion adapter 24 into a first opening 13 of a strain relief device 10.

The insertion direction ID2 and the insertion direction ID1 run in general perpendicular to a stacking direction SD of stacked strain relief devices 10.

The insertion direction ID2 and the insertion direction ID1 run in general parallel to the or each cable to be strain relived at the respective strain relief device 10. The insertion direction ID2 and the insertion direction ID1 run in general parallel to the first opening 13 and the second opening 15.

As shown in figures 5 and 6, an upper wall of the insertion adapter 24 being inserted into the opening 13 is positioned below the stop element 23 so that the stacking of first strain relief devices 10 does not interfere with the insertion adapter 24.

This installation of the or each cable and the modular stacking of the strain relief devices 10 can be made outside a fiber optic distribution device and after this installation and/or stacking the strain relief device 10 or system of strain relief devices 10 can be positioned or installed in a fiber optic distribution device.

Such a fiber optic distribution device (not shown) comprises a housing and at least one strain relief device 10 or a system of stacked strain relief devices 10, whereby such a strain relief device 10 or system of stacked strain relief devices 10 can be mounted to a mounting support of fiber optic distribution device using the fastening elements 28 of the strain relief device 10 or of one of the stacked strain relief devices 10 acting together with respective fastening elements assigned to the mounting support of fiber optic distribution device.

### List of reference numerals

- 10: strain relief device
- 11: basic body
- 12: first area
- 13: first opening
- 14: second area
- 15: second opening
- 16: screw member
- 17: profiled surface
- 18: cable
- 19: screw head
- 20: protrusion
- 21: widened end section
- 22: tapered end section
- 23: stop element
- 24: insertion adapter
- 25: conically shaped outer surface
- 26: widened end section
- 27: tapered end section
- 28: fastening element
- 29: fastening element
- 30: side wall
- 31: side wall
- 32: opening

## Claims

1. Strain relief device (10) for cables, comprising a basic body (11), the basic body (11) having a first area (12) with a first opening (13) for receiving and guiding at least one cable to be strain relieved, the basic body (11) further having a second area (14) with a second opening (15) for receiving a screw member (16), the second opening (15) being surrounded by a profiled surface (17), whereby strengthening elements of at least one cable received and guided with the first opening (13) can be clamped between a screw head (19) of the screw member (16) and the profiled surface (17) surrounding the second opening (15).

2. Strain relief device as claimed in claim 1, **characterised in that** the profiled surface (17) comprises protrusions (20).

3. Strain relief device as claimed in claim 2, **characterised in that** the protrusions (20) are shaped like a circular arcs.

4. Strain relief device as claimed in claim 2 or 3, **characterised in that** the protrusions (20) are concentrically positioned around the second opening (15).

5. Strain relief device as claimed in one of claims 1 to 4, **characterised in that** the basic body (11) has a cuboid shape, whereby the first area (12) having the first opening (13) is located at a first corner region of the cuboid shaped basic body (11), and whereby the second area (14) having the second opening (15) is located at a second, opposite corner region of the cuboid shaped basic body (11).

6. Strain relief device as claimed in one of claims 1 to 5, **characterised in that** the first opening (13) for receiving and guiding at least one cable to be strain relieved is conically shaped having a widened end section and a tapered end section.

7. Strain relief device as claimed in one of claims 1 to 6, **characterised in that** the first opening (13) receives one cable to be strain relieved or through an insertion adapter (24) a plurality of cables to be strain relieved.

8. Strain relief device as claimed in claim 7, **characterised in that** the insertion adapter (24) has a conically shaped outer surface (25) having a widened end section (26) and a tapered end section (27) and a plurality of openings (28) each for receiving one cable to be strain relieved.

9. Strain relief device as claimed in one of claims 1 to 8, **characterised in that** the first opening (13) and the second opening (15) run generally parallel to each other.

10. Strain relief device as claimed in one of claims 1 to 9, **characterised in that** fastening elements (28, 29) are located at opposite side walls (30, 31) basic body (11), namely first fastening elements (28) at a first side wall (30) of the basic body (11) and second fastening elements (29) at a second side wall (31) of the basic body (11).

11. System comprising a plurality of strain relief devices as claimed in claim 10, **characterised in that** the strain relief devices are stacked above each other in such a way that the first fastening elements (28) of the basic body (11) of a first strain relief device engage with the second fastening elements (29) of the basic body (11) of a second strain relief device.

12. Fiber optic distribution device, comprising a housing and optical fiber handling components, **characterised by** at least one strain relief device (10) as claimed in any of claims 1-10.
